(19) Europäisches Patentamt
European Patent Office
Office européen des brevets

(11) EP 0 946 623 B2

(12) **NEUE EUROPÄISCHE PATENTSCHRIFT**

(45) Veröffentlichungstag und Bekanntmachung des Hinweises auf die Entscheidung über den Einspruch:
**23.06.2004 Patentblatt 2004/26**

(45) Hinweis auf die Patenterteilung:
**28.02.2001 Patentblatt 2001/09**

(21) Anmeldenummer: **97954821.1**

(22) Anmeldetag: **18.12.1997**

(51) Int Cl.[7]: **C08G 18/78**, C09D 175/04

(86) Internationale Anmeldenummer:
**PCT/EP1997/007110**

(87) Internationale Veröffentlichungsnummer:
**WO 1998/027134 (25.06.1998 Gazette 1998/25)**

(54) **BESCHICHTUNGSMITTEL UND VERFAHREN ZU DESSEN HERSTELLUNG**

COATING AGENT AND METHOD FOR PRODUCING SAME

AGENT DE REVETEMENT ET SON PROCEDE DE PRODUCTION

(84) Benannte Vertragsstaaten:
**AT BE CH DE ES FR GB IT LI SE**

(30) Priorität: **18.12.1996 DE 19652886**
**14.06.1997 DE 19725188**

(43) Veröffentlichungstag der Anmeldung:
**06.10.1999 Patentblatt 1999/40**

(73) Patentinhaber: **BASF Coatings Aktiengesellschaft**
**48165 Münster (DE)**

(72) Erfinder:
- **BARTOL, Fritz**
  **D-59071 Hamm (DE)**
- **BAUMGART, Hubert**
  **D-48163 Münster (DE)**
- **RÖCKRATH, Ulrike**
  **D-48308 Senden (DE)**

(74) Vertreter: **Fitzner, Uwe, Dr. et al**
**Dres. Fitzner & Münch**
**Rechts- und Patentanwälte**
**Lintorfer Strasse 10**
**40878 Ratingen (DE)**

(56) Entgegenhaltungen:
**EP-A- 0 604 922**
**EP-A- 0 624 577**
**WO-A-96/34905**
**DE-C- 19 529 124**
**US-A- 4 939 213**

EP 0 946 623 B2

## Beschreibung

Die vorliegende Erfindung betrifft ein Komponentensystem für ein Zweikomponenten-Beschichtungsmittel enthaltend (1) ein hydroxyfunktionelles Bindemittel oder eine Mischung aus hydroxyfunktionellen Bindemitteln. (2) Tris (alkoxycarbonylamino)Triazin oder eine Mischung aus Tris(alkoxycarbonylamino)Triazinen und (3) freie Isocyanate oder eine Mischung aus freien Polyisocyanaten. Die Erfindung betrifft weiterhin Verfahren zur Herstellung eines solchen Komponentensystems sowie dessen Verwendung.

Unter Komponentensystem wird ein Gebinde aus verschiedenen, separat hergestellten und gelagerten Lackkomponenten verstanden, die jedoch stets in Verbindung miteinander gehandelt werden und die von einem Anwender, welcher aus einem Beschichtungsmittel einen Überzug fertigen will, vor der Herstellung des Überzuges zu dem Beschichtungsmittel gemischt werden. Solche Komponentensysteme sind u.a. zur Herstellung von Decklacken gebräuchlich. Unter dem Begriff Decklacke werden hierbel Lacke verstanden, die zur Herstellung der obersten Lackschicht verwendet werden. Die oberste Lackschicht kann dabei einschichtig oder mehrschichtig, insbesondere zweischichtig, sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht. Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überiackiert und anschließend Basistackschicht und Klarlackschicht zusammen gehärtet werden. Dieses Verfahren ist ökonomisch sehr vorteilhaft, stellt aber hohe Anforderungen an den Basislack und den Klarlack. Der auf den noch nicht gehärteten Basislack applizierte Klarlack darf die Basislackschicht nicht anlösen oder sonst wie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes, oder Perlglanzpigmente) enthalten, eingesetzt werden.

Komponentensysteme für Klarlacke, die vorwiegend für die Lackierung von Automobilen Verwendung finden, bestehen üblicherweise aus hydroxyfunktionellen Polyacrylaten mit freien Isocyanat-Trimeren des Hexamethylendiisocyanats. Die daraus erhaltenen Klarlacke weisen im applikationsfähigen Zustand einen Festkörpergehalt von 32 bis 45 Gew.-% auf. Ihre Vorteile liegen in einer niedrigen Härtungstemperatur von 20 bis 120 Grad C und einer hohen Chemikalienbeständigkeit. Diese Klarlacksysteme habe derzeit gegenüber melaminharzvernetzten Einkomponenten-Klarlacken jedoch verschiedene gravierende Nachteile:

1. Eine zu geringe Kratzbeständigkeit, besonders gegenüber leichten oberflächlichen Beschädigungen.
2. Eine schlechte Steinschlagbeständigkelt (Haftung) nach Schwitzwasserbelastung, vor allem nach einer Reparatur-Lackierung.
3. Einen aus Gründen des Umweltschutzes und der Wirtschaftlichkeit störend niedrigen Feststoffgehalt.
4. Ein starkes Wiederanlösen auf konventionellen Basislacken, das sich durch verringerten Flop bei Metallic-Basislacken bzw. Farbtonveränderungen in Basislack bemerkbar macht, insbesondere wenn versucht wird, den Feststoffgehalt durch Anteile von Acrylatharzen mit niedrigem Molekulargewicht zu erhöhen.

Einkomponenten-Klarlacke zeigen diese Probleme nicht oder nur in verringertem Maß, können aber aufgrund ihrer erheblich schlechteren Chemikalienbeständigkeit nicht anstelle von Zweikomponenten-Klarlacken verwendet werden.

Der vorliegenden Erfindung liegt somit die Aufgabe zugrunde, ein Beschichtungsmittel zur Verfügung zu stellen, das die oben genannten Nachteile üblicher Zwelkomponentenklarlacksysteme nicht aufweist, jedoch eine vergleichbare Chemikallenfestigkeit und Bewitterungsfestigkeit wie übliche Zweikomponentenklarlacksysteme hat.

Diese Aufgabe wird erfindungsgemäß gelöst durch ein Komponentensystem für ein Zweikomponenten-Beschichtungsmittel, enthaltend

(1) ein hydroxyfunktionelles Bindemittel oder eine Mischung aus hydroxyfunktionellen Bindemitteln,
(2) Tris(alkoxycarbonylamino)triazin oder eine Mischung aus Tris(alkoxycarbonylamino)triazinen und
(3) freiem Polyisocyanat oder eine Mischung aus freien Polyisocyanaten, wobei

- eine erste Komponente (I) zumindest aus dem hydroxyfunktionellen Bindemittel (1) oder aus der Mischung aus hydroxyfunktionellen Bindemitteln (1) gebildet ist,
- eine zweite Komponente (II) zumindest aus freiem Polyisocyanat (3) oder der Mischung aus freien Polyisocyanaten (3) gebildet ist und
- das Tris(alkoxycarbonylamino)triazin (2) oder die Mischung aus Tris(alkoxycarbonylamino)triazinen (2) alternativ Bestandteil der ersten Komponente (I), der zweiten Komponente (II) oder beider Komponenten (I) und (II) ist,

dadurch gekennzeichnet, daß das Bindemittel (1) oder die Bindemittel (1) aus der Gruppe, bestehend aus

(1.1) hydroxyfunktionellen Polyacrylaten, mit einer Hydroxylzahl von 60 bis 200, einer Säurezahl von 0 bis 35 und einem zahlenmittleren Molekulargewicht von 1500 bis 10000, die, bezogen auf die jeweilige Gesamtmenge,

(A 1) 10 bis 51 Gew.-% 4-Hydroxy-n-butylacrylat oder 4-Hydroxy-n-butylmethyacrylat oder deren Mischungen
(A 2) 0 bis 36 Gew.-% eines von (A 1) verschiedenen hydroxylgruppenhaltigen Esters der Acrylsäure oder eines hydroxylgruppenhaltigen Esters der Methacrylsäure oder eines Gemischs aus solchen Monomeren,
(A 3) 28 bis 85 Gew.-% eines von (A 1) und (A 2) verschiedenen aliphatischen oder cycloaliphatischen Esters der Methacrylsäure mit mindestens vier Kohlenstoffatomen im Alkoholrest oder eines Gemischs aus solchen Monomeren,
(A 4) 0 bis 3 Gew.-% einer ethylenisch ungesättigten Carbonsäure oder eine Mischung aus ethylenisch ungesättigten Carbonsäuren und
(A 5) 0 bis 20 Gew.-% eines von (A 1), (A 2), (A 3) und (A 4) verschiedenen ungesättigten Monomeren oder eines Gemischs aus solchen Monomeren

einpolymerisiert enthalten, wobei die Summe der Gewichtsteile der Komponenten (A 1) bis (A 5) stets 100% ergibt, und die Zusammensetzung der Komponente (A3) so gewählt wird, daß bei alleiniger Polymerisation der Komponente (A3) ein Polymethacrylatharz mit einer Glasübergangstemperatur von +10 bis +100 Grad C erhalten wird und
(1.2) hydroxyfunktionellen Polyesterharzen, herstellbar, indem

(a 1) eine cycloaliphatische oder aliphatische Polycarbonsäure oder eine Mischung aus solchen Polycarbonsäuren,
(b 1) ein aliphatisches oder cycloaliphatisches Polyol mit mehr als zwei Hydroxylgruppen im Molekül oder eine Mischung aus solchen Polyolen,
(c 1) ein aliphatisches oder cycloaliphatisches Diol oder eine Mischung aus solchen Diolen und
(d 1) eine aliphatische lineare oder verzweigte gesättigte Monocarbonsäure oder eine Mischung aus solchen Monocarbonsäuren

miteinander in einem molaren Verhältnis von (a 1) : (b 1 ) : (c 1 ) : (d 1) = 1,0 : 0,2 - 1,3 : 0,0 - 1,1 : 0,0 -1,4 umgesetzt werden,

ausgewählt wird oder werden.

Überraschenderweise werden erfindungsgemäß durch den Einsatz einer Vernetzer-Kombination aus Tris(alkoxycarbonylamino)Triazin und freien Isocyanaten erhebliche Vorteile gegenüber herkömmlichen Zweikomponentenklarlacken erzielt. Dazu zählen insbesondere:

- Verringertes Anlösen konventioneller Basislacke, das insbesondere an einem verbesserten Metalleffekt bei Metallic-Basislacken erkennbar ist,
- Verbesserte Haftung bei Steinschlagprüfungen,
- Verbesserte Kratzfestigkeit bei gleichzeitig hoher Säurebeständigkeit.

Aus der Literaturstelle DE 195 29 124 C1 ist grundsätzlich ein Beschichtungsmittel bekannt, welches auch Tris(alkoxycarbonylamino)Triazin als Vernetzer verwendet. Die in dieser Literaturstelle beschriebenen Beschichtungsmittel sind allerdings ausnahmslos Einkomponenten-Beschichtungsmittel. Zwar ist ein pauschaler Hinweis auf die Existenz von Mehrkomponentensystemen gegeben, es sind jedoch keinerlei Angaben oder auch nur Andeutungen gemacht, wie verschiedene Komponenten zusammengesetzt sein könnten.

Für das hydroxyfunktionelle Bindemittel oder für die Mischung aus hydroxyfunktionellen Bindemitteln kommen solche aus der Gruppe "Bindemittel auf Basis von hydroxyfunktionellen Polyacrylaten, hydroxyfunktionellen Polyestern "und/oder Mischungen aus Elementen dieser Gruppe und/oder Mischungen verschiedener Bindemittel eines Elements dieser Gruppe in Betracht

Erfindungsgemäß werden vorzugsweise Polyacrylatharze eingesetzt, die Hydroxylzahlen von 40 bis 240, vorzugsweise 60 bis 210, ganz besonders bevorzugt 100 bis 200, Säurezahlen von 0 bis 35, bevorzugt 0 bis 23, ganz besonders bevorzugt 3,9 bis 15,5, Glasübergangstemperaturen von -35 bis +70 °C, bevorzugt -20 bis +40 °C, ganz besonders bevorzugt -10 bis +15 °C und zahlenmittlere Molekulargewichte von 1500 bis 30000, bevorzugt 2000 bis 15000, ganz besonders bevorzugt 2500 bis 5000 aufweisen.

Die Glasübergangstemperatur der Polyacrylatharze wird durch Art und Menge der eingesetzten Monomere bestimmt Die Auswahl der Monomeren kann vom Fachmann unter Zuhilfenahme der folgenden Formel, mit der die

Glasübergangstemperaturen von Polyacrylatharzen näherungsweise berechnet werden können, vorgenommen werden:

$$\frac{1}{Tg} = \sum_{n} \frac{W_n}{Tg_n} \; ; \quad \sum_{a} W_a = 1$$

Tg = Glasübergangstemperatur des Polyacrylatharzes
$W_n$ = Gewichtsanteil des n-ten Monomers
$Tg_n$ = Glasübergangstemperatur des Homopolymers aus dem n-ten Monomer

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als hydroxyfunktionelle Bindemittelkomponente werden beispielsweise Polyesterharze bzw. Alkydharze eingesetzt, die herstellbar sind, indem (a1) eine cycloaliphatische oder aliphatische Polycarbonsäure oder eine Mischung aus solchen Polycarbonsäuren (b1)ein aliphatisches oder cycloaliphatisches Polyol mit mehr als zwei Hydroxylgruppen im Molekül oder eine Mischung aus solchen Polyolen (c1) ein aliphatisches oder cycloaliphatisches Diol oder eine Mischung aus solchen Diolen und (d1) eine aliphatische lineare oder verzweigte gesättigte Monocarbonsäure oder eine Mischung aus solchen Monocarbonsäuren in einem molaren Verhältnis von (a1): (b1) : (c1) : (d1) = 1,0 : 0,2 - 1,3 : 0,0 - 1,1 : 0,0 - 1,4, vorzugsweise 1,0 : 0,5 - 1.2 : 0,0 - 0,6 : 0,2 - 0,9 zu einem Polyesterharz bzw. Alkydharz umgesetzt werden. Als Beispiele für den Bestandteil (a1) werden genannt: Hexahydrophtalsäure, 1,4-Cyclohexandicarbonsäure, Endomethylentetrahydrophtalsäure, Oxalsäure, Malonsäure, Bemsteinsäure, Glutarsäure, Adipinsäure, Pimelinsäure, Korksäure, Azelainsäure und Sebacinsäure. Als Beispiele für den Bestandteil (b1) werden genannt Pentaerythrit, Trimethylolpropan, Trimethylolethan und Glycerin. Als Beispiele für den Bestandteil (c1) werden genannt: Ethylenglykol, Diethylenglykol, Propylenglykol, Neopentylglykol, 2-Methyl-2-propylpropandiol-1,3,2-Ethyl-2-butylpropandiol-1,3, 2,2,4-Trimethyl- pentandiol-1,5, 2,2,5-Trimethylhexandiol-1,6, Hydroxypivalinsäureneopentylglykolester und Dimethylolcyclohexan. Als Beispiele für den Bestandteil (d1) werden genannt 2-Ethylhexansäure, Laurinsäure, Isooctansäure, Isononansäure und Monocarbonsäuremischungen, die aus Kokosfett oder Palmkernfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Resines Alkydes-Polyesters von J. Bourry, Paris Verlag Dunod 1952, Alkyd Resins von C.R. Martens, Reinhold Publishing Corporation, New York 1961 und Alkyd Resin Technology von T. C. Patton, Interscience Publishers 1962 beschrieben.

Als hydroxyfunktionelle Bindemittelkomponente werden beispielsweise auch Polyacrylatharze eingesetzt, die erhältlich sind, indem (A1) 10 bis 51 Gew.-%, vorzugsweise 25 bis 41 Gew,-%, 4-Hydroxy-n-butylacrylat oder 4-Hydroxy-n-butylmethacrylat oder eine Mischung aus 4-Hydroxy-n-butylacrylat und 4-Hydroxy-n-butylmethacrylat, vorzugsweise 4-Hydroxy-n-butylacrylat, (A2) 0 bis 36 Gew.-%, vorzugsweise 0,1 bis 20 Gew.-%, eines von (A1) verschiedenen hydroxylgruppenhaltigen Esters der Acrylsäure oder eines hydroxylgruppenhaltigen Esters der Methacrylsäure oder eines Gemisches aus solchen Monomeren, (A3) 28 bis 85 Gew.-%, vorzugsweise 40 bis 70 Gew.-% eines von (A1) und (A2) verschiedenen aliphatischen oder cycloaliphatischen Esters der Methacrylsäure mit mindestens 4 C-Atomen im Alkoholrest oder eines Gemisches aus solchen Monomeren, (A4) 0 bis 3 Gew.-%, vorzugsweise 0,1 bis 2 Gew.-%, einer ethylenisch ungesättigten Carbonsäure oder einer Mischung aus ethylenisch ungesättigten Carbonsäuren und (A5) 0 bis 20 Gew.-%, vorzugsweise 5 bis 15 Gew.-% eines von (A1), (A2), (A3) und (A4) verschiedenen ungesättigten Monomeren oder eines Gemisches aus solchen Monomeren zu einem Polyacrylatharz mit einer Hydroxylzahl von 60 bis 200, vorzugsweise von 100 bis 160, einer Säurezahl von 0 bis 35, vorzugsweise von 0 bis 25, und einem zahlenmittleren Molekulargewicht von 1500 bis 10000, vorzugsweise 2500 bis 5000, polymerisiert werden, wobei die Summe der Gewichtsteile der Komponenten (A1) bis (A5) stets 100% ergibt und die Zusammensetzung der Komponente (A3) so gewählt wird, daß bei alleiniger Polymerisation der Komponente (A3) ein Polymethacrylatharz mit einer einer Glasübergangstemperatur von +10 bis +100 Grad C, vorzugsweise von +20 bis +60 Grad C, erhalten wird. Als Beispiele für die Komponente (A2) werden genannt Hydroxyalkylester der Acrylsäure, wie z.B. Hydroxyethylacrylat und Hydroxypropylacrylat und Hydroxyalkylester der Methacrylsäure, wie z.B. Hydroxyethylmethacrylat und Hydroxypropylmethacrylat, wobei die Wahl so zu treffen ist, daß bei alleiniger Polymerisation der Komponente (A2)

ein Polyacrylatharz mit einer Glasübergangstemperatur von 0 bis +80 Grad C, vorzugsweise von +20 bis +60 Grad C erhalten wird. Als Beispiele für die Komponente (A3) werden genannt: aliphatische Ester der Methacrysäure mit 4 bis 20 C-Atomen im Alkoholrest, wie z.B. n-Butyl-, iso-Butyl-, tert.-Butyl-, 2-Ethylhexyl-, Stearyl- und Laurylmethacrylat, und cycloaliphatische Ester der Methacrylsäure wie, z.B. Cyclohexylmethacrylat. Als Komponente (A4) werden vorzugsweise Acrylsäure und/oder Methacrylsäure eingesetzt. Als Beispiele für die Komponente (A5) werden genannt: vinylaromatische Kohlenwasserstoffe, z.B. Styrol, a-Alkylstyrol und Vinyltuluol, Amide der Acrylsäure und Methacrylsäure, z.B. Methacrylamid und Acrylamid, Nitrile der Acrylsäure und Methacrylsäure, Vinylether und Vinylester. Als Komponente (A5) werden vorzugsweise vinylaromatische Kohlenwasserstoffe, insbesondere Styrol, eingesetzt. Die Zusammensetzung der Komponente (A5) ist vorzugsweise so zu treffen ist, daß bei alleiniger Polymerisation der Komponente (A5) ein Polymer mit einer Glasübergangstemperatur von +70 bis +120 Grad C, vorzugsweise von +80 bis +100 Grad C erhalten wird. Die Herstellung dieser Polyacrylatharze kann nach allgemein gut bekannten Polymerisationsverfahren (siehe z.B. Houben-Weyl, Methoden der organischen Chemie, 4. Auflage, Band 14/1, Seite 24 bis 255 (1961)) erfolgen. Sie werden vorzugsweise mit Hilfe der Lösungsmittelpolymerisation hergestellt. Hierbei wird üblicherweise ein organisches Lösungsmittel bzw. Lösungsmittelgemisch vorgelegt und zum Sieden erhitzt. In dieses organische Lösungsmittel bzw. Lösungsmittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160 Grad C, vorzugsweise zwischen 130 und 150 Grad C. Als Polymerisationsinitiatoren werden vorzugsweise freie Radikale bildende Initiatoren eingesetzt. Initiatorenart und -menge werden üblicherweise so gewählt, daß bei der Polymerisationstemperatur während der Zulaufphase ein möglichst konstantes Radikalangebot vorliegt. Als Beispiele für einsetzbare Initiatoren werden genannt: Dialkylperoxide, z.B. Di-tert.-Butylperoxid und Dicumylperoxid, Hydroperoxide, z.B. Cumolhydroperoxid und tert.-Butylhydroperoxid, Perester, z.B. tert.-Butylperbenzoat, tert. -Butylperpivalat, tert.-Butylper-3,5,5-trimethylhexanoat und tert.-Butylper-2-ethylhexanoat. Die Polymerisationsbedingungen (Reaktionstemperatur, Zulaufzeit der Monomerenmischung, Menge und Art der organischen Lösungsmittel und Polymerisationsinitiatoren, evt. Mitverwendung von Molekulargewichtsreglern z.B.

Mercaptane, Thioglykolsäureester und Chlorwasserstoffe) werden so ausgewählt, daß die Polyacrylatharze ein zahlenmittleres Molekulargewicht wie angegeben (bestimmt durch Gelpermeationschromatographie unter Verwendung von Polystyrol als Eichsubstanz) aufweisen. Die Säurezahl kann vom Fachmann durch Einsatz entsprechender Mengen der Komponente (A4) eingestellt werden. Analoges gilt für die Einstellung der Hydroxylzahl. Sie ist über die Menge an eingesetzter Komponente (A1) und (A2) steuerbar.

Erfindungsgemäß kommen auch Bindemittel auf der Basis von Polyurethan in Betracht.

Erfindungswesentlich ist schließlich, daß das Beschichtungsmittel die Bestandteile (2) und (3) enthält, welche beide Vernetzungsmittel sind.

Als Bestandteil (2) werden Tris(Alkoxycarbonylamino)Triazine der Formel

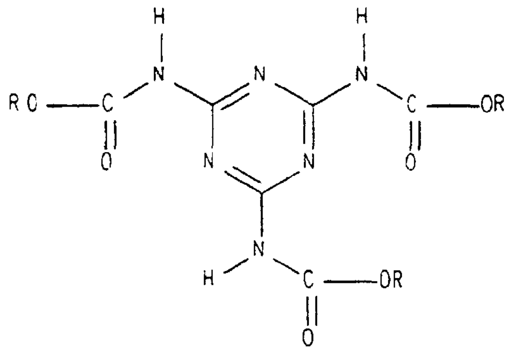

eingesetzt, wobei R=Methyl, Butyl-.....Gruppen bedeuten. Ebenso können Derivate der genannten Verbindungen zum Einsatz kommen. Bevorzugt werden für den Bestandteil (2) Tris(Alkoxycarbonylamino)Triazine eingesetzt, wie sie in der US-PS 5084541 beschrieben sind.

Der Bestandteil (3) enthält als Vernetzungsmittel mindestens ein gegebenfalls in einem oder mehreren organischen, gegebenenfalls wasserverdünnbaren Lösemitteln gelöstes oder dispergiertes, nichtblockiertes Di- und/oder Polyisocyanat. Zusätzlich kann aber auch blockiertes Isocyanat oder eine Mischung aus blockierten Polyisocyanatenenthalten sein.

Bei dem zwingend eingesetzten freien Polyisocyanatbestandteil handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis

2000 mPa.s (bei 23 Grad C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Butylacetat und ähnliches. Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind die bei der Beschreibung der Polyurethanharze (A2) genannten Isocyanate und/oder isocyanatgruppenhaltigen Polyurethanpräpolymere, die durch Reaktion von Polyolen mit einem Überschuß an Polyisocyanaten hergestellt werden können und die bevorzugt niederviskos sind. Es können auch Isocyanuratgruppen und/oder Biuretgruppen und/oder Allophanatgruppen und/oder Urethangruppen und/oder Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Wenn blockiertes Isocyanat zugemischt ist, so ist es vorzugsweise so ausgebildet, daß es sowohl mit einem Blockierungsmittel (Z1) als auch mit einem Blockierungsmittel (Z2) blockierte Isocyanatgruppen enthält, wobei das Blockierungsmittel (Z1) ein Dialkylmalonat oder eine Mischung aus Dialkylmalonaten ist, das Blockierungsmittel (Z2) ein von (Z1) verschiedenes, aktive Methylengruppen enthaltendes Blockierungsmittel, ein Oxim oder eine Mischung aus diesen Blockierungsmitteln ist und das Äquivalentverhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Das blockierte Isocyanat wird vorzugsweise wie folgt hergestellt. Ein Polyisocyanat oder eine Mischung aus Polyisocyanaten wird in an sich bekannter Art und Weise mit einer Mischung aus den Blockierungsmitteln (Z1) und (Z2) umgesetzt, wobei die Mischung aus den Blockierungsmitteln (Z1) und (Z2) die Blockierunqsmittel (Z1) und (Z2) in einem Molverhältnis enthält, das zwischen 1,0: 1,0 und 9,0 : 1,0, vorzugsweise zwischen 8,0: 2,0 und 6,0 : 4,0, besonders bevorzugt zwischen 7,5 : 2,5 und 6,5 : 3,5 liegt. Das Polyisocyanat bzw. die Mischung aus Polyisocyanaten kann mit der Mischung aus den Blockierungsmitteln (Z1) und (Z2) so weit umgesetzt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern. Es gefunden, da8 auch dann Lacke mit guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (Z1) und (Z2) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexandiol-1,6 oder das als Bestandteil (1) einsetzbare hydroxylgruppenhaltige Bindemittel eingesetzt. Ein geeignetes blockiertes Polyisocyanat ist auch erhältlich, indem mit dem Blockierungsmittel (Z1) bzw. (Z2) blockierte Polyisocyanate in einem solchen Verhältnis gemischt werden, daß eine Mischung erhalten wird, in der das Äquivalent-Verhältnis zwischen den mit (Z1) blockierten Isocyanatgruppen und den mit (Z2) blockierten Isocyanatgruppen zwischen 1,0: 1,0 und 9,0: 1,0, vorzugsweise zwischen 8,0 : 2,0 und 6,0: 4,0, besondere bevorzugt zwischen 7,5: 2,5 und 6,5: 3,5 liegt. Prinzipiell können alle auf dem Lackgebiet einsetzbaren Polyisocyanate zur Herstellung des blockierten Polyisocyanats eingesetzt werden. Es ist jedoch bevorzugt, Polyisocyanate einzusetzen, deren Isocyanatgruppen an aliphatische oder cycloaiiphatische Reste gebunden sind. Beispiele für derartige Polyisocyanate sind Hexamethylendiisocyanat, Isophorondiisocyanat, Trimethylhexamethylendiisocyanat, Dicyclohexylmethandiisocyanat und 1,3-Bis-(2-isocyanatopropyl-2-)benzol (TMXDI) sowie Addukte dieser Polyisocyanate an Polyole, insbesondere niedermolekulare Polyole, wie z.B. Trimethylolpropan und von diesen Polyisocyanaten abgeleitete isocyanuratgruppen- und/oder biuretgruppenhaltige Polyisocyanate. Als Polyisocyanate werden besonders bevorzugt Hexamethylendiisocyanat und Isophorondiisocyanat, von diesen Diisocyanaten abgeleitete isocyanurat- oder biuretgruppenhaltige Polyisocyanate, die vorzugsweise mehr als zwei Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Aquivalenten eines niedermolekularen Polyols mit einem Molekulargewicht von 62 bis 500, vorzugsweise von 104 bis

204, insbesondere eines Triols, wie zum Beispiel Trimethylolpropan, eingesetzt. Als Blocklerungsmittel (Z1) werden Dialkylmalonate oder eine Mischung aus Dialkylmalonaten eingesetzt. Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylestar, wobei Malonsäurediethylester bevorzugt eingesetzt wird. Als Blokkierungsmittel (Z2) werden von (Z1) verschiedene, aktive Methylengruppen enthaltende Blockierungsmittel und Oxime sowie Mischungen aus diesen Blockierungsmitteln eingesetzt. Als Beispiele für Blockierungsmittel, die als Blockierungsmittel (Z2) einsetzbar sind, werden genannt: Acetessigsäuremethyl-, ethyl-, -propyl-, butyl-,-pentyl-, hexyl -, heptyl-, octyl-, nonyl-, -decyl- oder -dodecylester, Acetonoxim, Methylethylketoxim, Acetylaceton, Formaldoxim, Acetaldoxim, Benzophenoxim, Acetoxim und Diisobutylketoxim. Als Blockierungsrnittel (Z2) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (Z2) eingesetzt.

Eine bevorzugte Ausführungsform der Erfindung ist dadurch gekennzeichnet, daß die Mengen der Bestandteile (1) bis (3) in den Verhältnissen zueinander so gewählt sind, daß das Verhältnis OH: (NCO + NH-CO-OR) 1,0:0,5 bis 1,0:2,0, vorzugsweise 1,0:0,8 bis 1,0:1,5, beträgt. Die Polyisocyanatkomponente wird in den erfindungsgemäßen Beschichtungsmitteln z.B. im einzelnen vorteilhafterweise in einer solchen Menge eingesetzt, daß das Verhältnis der Hydroxylgruppen des Bindemittels (1) zu den Isocyanatgruppen der Vernetzer (2) und (3) zwischen 1 : 2 und 2 : 1, besonders bevorzugt zwischen 1 : 1,5 und 1,5 : 1 liegt.

Das Mengenverhältnis der Bestandteile (2) und (3) zueinander ist vorteilhafterweise so ausgewählt, daß die Menge an Tris(alkoxycarbonylamino)Triazin oder an Mischung aus Tris(alkoxycarbonylamino)Triazinen 1 bis 99 Gew. %, vorzugsweise 5 bis 90 Gew.%, beträgt, bezogen auf die Gesamtmenge an Tris(alkoxycarbonylamino)Triazin bzw. Mischung aus Tris(alkoxycarbonylamino)Triazinen plus freie Isocyanate bzw. der Mischung aus freien Polyisocyanate. Sind blockierte Isocyanate beigemischt, so gilt entsprechendes, nur dann jeweils bezogen auf die entsprechende Gesamtmenge an Isocyanaten anstatt lediglich freier Polyisocyanate.

Im einzelnen kann das Komponentensystem UV-Absorber, vorzugsweise Triazinverbindungen, und Radikalfänger in zumindest einer der beiden Komponenten (I) und/oder (II) enthalten. Das Komponentensystem kann ferner Katalysatoren für die Vernetzung enthalten. Hierfür kommen insbesondere metallorganische Verbindungen, vorzugsweise Zinn und/oder wismutorganische Verbindungen in Betracht. Ebenso können tertiäre Amine in Frage kommen. Das Komponentensystem kann ferner Rheologiemittel sowie sonstige Lackhilfsstoffe in zumindest einer der beiden Komponenten (I) und/oder (II) enthalten. Selbstverständlich können auch Pigmente jeglicher Art, beispielsweise Farbpigmente wie Azopigmente, Phtalocyaninpigmente, Carbonylpigmente, Dioxazinpigmente, Titandioxid, Farbruß, Eisenoxide und Chrom- bzw. Kobaldoxide, oder Effektpigmente wie Metallplättchenpigmente, insbesondere Aluminiumplättchenpigmente und Perlglanzpigmente, in zumindest einer der beiden Komponenten (I) und/oder (II) eingebaut sein. Vorzugsweise sind aber keine oder transparente Pigmente vorgesehen.

Die Herstellung der beiden Komponenten (I) und (II) erfolgt nach den üblichen Methoden aus den einzelnen Bestandteilen unter Rühren. Die Herstellung des Beschichtungsmittels aus den Komponenten (I) und (II) erfolgt ebenfalls mittels Rühren bzw. Dispersion unter Verwendung der üblicherweise eingesetzten Vorrichtungen, beispielsweise mittels Dissolver o.ä. oder mittels ebenfalls üblicherweise eingesetzter 2-Komponenten-Dosier- und -mischanlagen oder mittels des in der DE-A-195 10 651, Seite 2, Zeile 62, bis Seite 4, Zeile 5, beschriebenen Verfahrens zur Herstellung wäßriger 2-K-Polyurethanlacke.

Die Komponenten, insbesondere die Komponente (I), können als nichtwäßrige (i.e. mit organischen Lösungsmitteln) oder als wäßrige Komponenten formuliert sein. Im Falle einer nichtwäßrigen Formulierung können die in der Lackherstellung üblichen organischen Lösungsmittel Verwendung finden. Mittels wäßriger Komponenten werden wäßrige Beschichtungsmittel nach Mischung der Komponenten (I) und (II) erhalten. Ist ein wäßriges Beschichtungsmittel gewünscht, so können die Komponenten (I) und/oder (II) aber auch weitgehend wasserfrei und weitgehend frei von organischen Lösungsmitteln, jedoch als in Wasser dispergierbar formuliert sein. Dann wird das wäßrige Beschichtungsmittel durch Mischung der Komponenten und Zugabe von Wasser erhalten. Eine in Wasser dispergierbare bzw. lösbare Komponente (I) ist auf übliche Weise formulierbar, indem beispielsweise saure Gruppen in das Bindemittel eingebracht werden, welche dann mit einer üblichen Base, beispielsweise Ammoniak oder einem organischen Amin wie Triethylamin neutralisiert werden. Die Lösung bzw. Dispersion einer in Wasser dispergierbaren Komponente (I) und/oder (II) in Wasser erfolgt auf übliche Weise z.B. durch starkes Rühren ggf. unter leichter Erwärmung. Alternativ kann eine Lösung bzw. Dispersion in Wasser mittels nichtionischer Emulgatoren erfolgen. Insofern wird ebenfalls auf Standardverfahren der Herstellung wäßriger Lacke verwiesen.

Die Erfindung betrifft auch Verfahren zur Herstellung eines erfindungsgemäßen Komponentensystems. Hierzu sind im wesentlichen drei Varianten vorteilhaft. Zum ersten ein Verfahren zur Herstellung eines Komponentensystem, welches dadurch gekennzeichnet ist, daß die Komponente (I) durch Mischen des hydroxyfunktionellen Bindemittels oder der Mischung aus hydroxyfunktionellen Bindemitteln mit Tris(alkoxycarbonylamino)Triazin oder der Mischung aus Tris(alkoxycarbonylamino)Triazinen hergestellt wird, und die Komponente (II) aus freiem Polyisocyanat

oder der Mischung aus freien Polyisocyanaten hergestellt wird. Zum zweiten ein Verfahren zur Herstellung eines Komponentensystems, welches dadurch gekennzeichnet ist, daß die Komponente (II) durch Mischen freier Isocyanate oder der Mischung aus freien Polyisocyanaten mit Tris(alkoxycarbonylamino)Triazin oder der Mischung aus Tris(alkoxycarbonylamino)Triazinen hergestellt wird, und die Komponente (I) aus dem hydroxyfunktionellen Bindemittel oder der Mischung aus hydroxyfunktionellen Bindemitteln hergestellt wird. Zum Dritten ein Verfahren zur Herstellung eines Komponentensystems, welches dadurch gekennzeichnet ist, daß die Komponente (II) durch Mischen freier Isocyanate oder der Mischung aus freien Polyisocyanaten mit einer ersten Teilmenge Tris(alkoxycarbonylamino)Triazin oder der Mischung aus Tris(alkoxycarbonylamino)Triazinen hergestellt wird, und die Komponente (I) durch Mischen des hydroxyfunktionellen Bindemittel oder der Mischung aus hydroxyfunktionellen Bindemitteln mit einer zweiten Teilmenge Tris (alkoxycarbonylamino)Triazin oder der Mischung aus Tris(alkoxycarbonylamino)Triazinen hergestellt wird. Bei allen Varianten ist es vorteilhaft, wenn die Mengen der Bestandteile (1) bis (3) so gewählt werden, daß das Verhältnis OH: (NCO + NH-CO-OR) 1, 0:0, 5 bis 1, 0:2, 0, vorzugsweise 1., 0:0, 8 bis 1, 0:1, 5 beträgt.

Schließlich betrifft die Erfindung auch noch die Verwendungen gemäß der Patentanspüche 11 bis 13.

Das erfindungsgemäße Komponentensystem wird zur Herstellung von Ein- oder Mehrschichtlackierungen und bevorzugt zur Herstellung von Decklacken eingesetzt. Es kann aber auch zur Herstellung eines über einer Basislackschicht zu applizierenden Klarlacks, beispielsweise eines Klarlacks einer nach dem naß-in-naß-Verfahren hergestellten Mehrschichtlackierung bestimmt sein. Selbstverständlich können die Kunststoffe oder die anderen Substrate auch direkt mit dem Klarlack oder dem Decklack beschichtet werden.

Schließlich können die Beschichtungsmittel auch auf andere Substrate, wie beispielsweise Metall, Holz oder Papier, appliziert werden. Die Applikation erfolgt mit Hilfe üblicher Methoden, beispielsweise Spritzen, Rakeln, Tauchen oder Streichen.

Aufgrund der genannten erfindungsgemäßen Verwendungen des Komponentensystems fallen auch damit hergestellte Bindemittel bzw. Lacke, sowie mit diesen Bindemitteln bzw. Lacken beschichtete Gegenstände unter die Erfindung.

Die erfindungsgemäßen Beschichtungsmittel werden vorzugsweise bei 80 bis 170 °C gehärtet. Besonders bevorzugt bei Temperaturen zwischen 100 und 150 °C. In speziellen Anwendungsformen der erfindungsgemäßen Beschichtungsmittel können auch tiefere Härtungstemperaturen angewendet werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden bevorzugt aber im Bereich der Serienlackierung eingesetzt.

Die Erfindung wird im folgenden unter Bezugnahme auf die Beispiele näher beschrieben:

## 1. Herstellung von Bindemittellösungen

### 1.1. Acrylatharz A

In einem Labor-Reaktor mit einem Nutzvolumen von 4 l ausgestattet mit einem Rührer, zwei Tropftrichtern für die Monomermischung resp. Initiatorlösurig, Stickstoff-Einleitungsrphr, Thermometer und Rückflußkühler werden 899 g einer Fraktion aromatischer Kohlanwasserstoffe mit einem Siedebereich von 158°C - 172°C eingewogen. Das Lösemittel wird auf 140°C aufgeheizt. Nach Erreichen von 140°C werden eine Monomermischung aus 727 g n-Butyimethacrylat, 148 g Cyclohexylmethacrylat, 148 g Styrol, 445 g 4-Hydroxibutylacrylat und 15 g Acrylsäure innerhalb von 4 Stunden, und eine Initiatorlösung von 29 g t-Butylperethylhexanoat in 89 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140°C gehalten und danach abgekühlt. Die resultierende Polymerlösung hat einen Feststoffgehalt von 62% bestimmt in einem Umluftofen 1 h bei 130 Grad C), eine Säurezahl von 9 und eine Viskosität von 21 dPa.s (gemessen an einer 60%igen Anlösung der Polymerlösung in dem beschrieben aromatischen Lösemittel, unter Verwendung eines ICI-Platte-Kegel Viskosimeters bei 23 Grad C).

### 1.3. Alkydharz C

In einem Labor-Reaktor mit einem Nutzvolumen von 4 l ausgestattet mit einem Rührer, Wasserabscheider, Rückflußkühler, Stickstoff-Einleitungsrohr und Thermometer werden 1330 g Hexahydrophthalsäureanhydrid, 752 g 1, 1,1 Trimethylolpropan, 249 g 1,4-Dimethylolcyclohexan, 204 g Hexandiol-1,6, 136 g Isononansäure (als Isomerengemisch von 3,3,5-Trimethylhexansäure und 3,5,5Trimethylhexansäure) und 75 g Xylol als Schleppmittel eingewogen. Der Wasserabscheider wird mit Xylol gefällt. Der Inhalt des Reaktors wird innerhalb von 8 Stunden auf 210 Grad C so aufgeheizt, daß ein gleichmäßiger Rückfluß des Schleppmittels entsteht. Der Reaktorinhalt wird auf 210 Grad C gehalten, bis eine Säurezahl von 17,1 und eine Viskosität von 15 dPas, gemessen an einer 60 %-igen Lösung des Reaktionsgemisches in dem in den Acrylatharzen A und B beschriebenen aromatischen Lösemittel, erreicht ist. Dann wird auf 140 Grad C abgekühlt und der Inhalt des Reaktors mit so viel des genannten aromatischen Lösemittels angelöst, daß ein nichtflüchtiger Anteil von 61 % (bestimmt in einem Umluftoferi 60 min bei 130 Grad C) resultiert, Die auf diese Weise hergestellte Alkydharzlösung hat eine Säurezahl von 17,1 und eine Viskosität von 15 dPa.s (gemessen an einem ICI-Platte-Kegel-Viskosimeter bei 23 Grad C).

**2. Herstellung der Zwelkomponenten-Klarlacke**

**2,1. Komponente (I)**

Die Komponente (I) der Zweikomponenten-Klarlacke wird hergestellt, indem man die Bindemittellösung einwiegt, dann unter Rühren die in Tabelle 1 angegebenen Mengen Triazinvemetzer, Lösemittel, UV-Absorber, Radikalfänger und Verlaufsmittel zugibt und gut einrührt. Die Mengenangaben in dieser und den folgenden Tabellen sind als Gewichtsangaben zu verstehen.

Tabelle 1:

| | Komp.1a | Komp.1b | | | Komp.1e | Komp.1f |
|---|---|---|---|---|---|---|
| Acrylatharz A | 79,6 | 55,0 | | | | |
| | | | | | | |
| Alkydharz C | | | | | 72,0 | 62,0 |
| Triazinvernetzer gemäß US 5084541 | | 13 | | | | 10,0 |
| Tiniuvin 400 | 1,3 | 1,3 | | | | |
| Tiniuvin 123 | 1,0 | 1,0 | | | | |
| Tiniuvin 384 | | | | | 1,2 | 1,2 |
| Tiniuvin 292 | | | | | 1,0 | 1,0 |
| Siliconöl-lösung | 2,5 | 2,5 | | | 3,0 | 3,0 |
| Butyldiglycolacetat | 4,0 | 4,0 | | | 9,0 | 9,0 |
| Butylglycolacetat | 4,0 | 4,0 | | | 5,5 | 5,5 |
| Methoxipropylacetat | 3,0 | 3,6 | | | | |
| Solvent-naphta | | | | | 5,1 | 5,1 |
| Butylacetat | 4,6 | 15,6 | | | 3,2 | 3,2 |

**2.2. Komponente (II)**

Die Komponente **(II)** besteht aus einer Anlösung handelsüblicher Isocyanurat-Trimere in einem geeigneten Lösemittel. Sie wird durch Einrühren der Lösemittels in die Lieferform der Isocyanurate gemäß Tabelle 2 hergestellt

**2.2. Komponente (II)**

Die Komponente (II) besteht aus einer Anlösung handelsüblicher Isocyanurat-Trimere in einem geeigneten Lösemittel. Sie wird durch Einrühren der Lösemittels in die Lieferform der Isocyanurate gemäß Tabelle 2 hergestellt

Tabelle 2:

| | Komponente 2a | Komponente2b |
|---|---|---|
| Desmodur Z 4470 | 63,5 | 26,5 |
| Tolonate HDT 90 | 24,8 | |
| Basonat HI 190 B/S | | 61,8 |
| Solventnaphra | 5,85 | 5,85 |

Tabelle 2: (fortgesetzt)

| | Komponente 2a | Komponente2b |
|---|---|---|
| Butylacetat | 5,85 | 5,85 |

### 3. Herstellung der Klarlacke

Die Klarlacke werden hergestellt indem man die Komponenten (I) und (II) gemäß der in Tabelle 3 angegebenen Mengenverhältnisse gemischt werden und sofort nach der Mischung appliziert werden. Alternativ können für die Applikation auch spezielle Zweikomponenten- Anlagen angewandt werden, die dem Durchschnittsfachmann bekannt sind und daher hier nicht näher beschrieben werden müssen. In der Tabelle 3 finden sich außerdem Eigenschaften der Klarlacke, die die Erfindung verdeutlicht.

Tabelle 3:

| | Klarlack 1 | Klarlack2 | | | Klarlack5 | Klarlack6 |
|---|---|---|---|---|---|---|
| Komp. 1a | 73,9 | | | | | |
| Komp. 1b | | 93,5 | | | | |
| | | | | | | |
| | | | | | | |
| Komp. 1e | | | | | 76,7 | |
| Komp. 1f | | | | | | 86,7 |
| Komp. 2a | 26,1 | 6,5 | | | | |
| Komp. 2b | | | | | 23,3 | 13,3 |
| | | | | | | |
| Kratzfestig-keit*3 | schlecht | gut | | | schlecht | gut |
| JV(Note)+ 1) | 4,0 | 4,0 | | | 3,0 | 3,0 |
| Steinschla g+2) | schlecht | gut | | | schlecht | gut |

*1) Note nacn 14 Wochen Freibewitterung in Jacksonville/Florida (1 = keine Schädigung, 10 = Reklamationstall)

*2) Steinschlagprüfüng nach VDA 621-428 (Monoschlag) Progress In organic coatings, vol. 22, 1993

## Patentansprüche

**1.** Komponentensystem für ein Zweikomponenten-Beschichtungsmittel, enthaltend

(1) ein hydroxyfunktionelles Bindemittel oder eine Mischung aus hydroxyfunktionellen Bindemitteln,
(2) Tris(alkoxycarbonylamino)triazin oder eine Mischung aus Tris(alkoxycarbonylamino)triazinen und
(3) freiem Polyisocyanat oder eine Mischung aus freien Polyisocyanaten,

wobei

- eine erste Komponente (I) zumindest aus dem hydroxyfunktionellen Bindemittel (1) oder aus der Mischung aus hydroxyfunktionellen Bindemitteln (1) gebildet ist,

- eine zweite Komponente (II) zumindest aus freiem Polyisocyanat (3) oder der Mischung aus freien Polyisocyanaten (3) gebildet ist und

- das Tris(alkoxycarbonylamino)triazin (2) oder die Mischung aus Tris(alkoxycarbonylamino)triazinen (2) alternativ Bestandteil der ersten Komponente (I), der zweiten Komponente (II) oder beider Komponenten (I) und (II) ist,

**dadurch gekennzeichnet, dass** das Bindemittel (1) oder die Bindemittel (1) aus der Gruppe, bestehend aus

(1.1) hydroxyfunktionellen Polyacrylaten, mit einer Hydroxylzahl von 60 bis 200, einer Säurezahl von 0 bis 35 und einem zahlenmittleren Molekulargewicht von 1500 bis 10000, die, bezogen auf die jeweilige Gesamtmenge,

(A 1) 10 bis 51 Gew.-% 4-Hydroxy-n-butylacrylat oder 4-Hydroxy-n-butylmethyacrylat oder deren Mischungen
(A 2) 0 bis 36 Gew.-% eines von (A 1) verschiedenen hydroxylgruppenhaltigen Esters der Acrylsäure oder eines hydroxylgruppenhaltigen Esters der Methacrylsäure oder eines Gemischs aus solchen Monomeren,
(A 3) 28 bis 85 Gew.-% eines von (A 1) und (A 2) verschiedenen aliphatischen oder cycloaliphatischen Esters der Methacrylsäure mit mindestens vier Kohlenstoffatomen im Alkoholrest oder eines Gemischs aus solchen Monomeren,
(A 4) 0 bis 3 Gew.-% einer ethylenisch ungesättigten Carbonsäure oder eine Mischung aus ethylenisch ungesättigten Carbonsäuren und
(A 5) 0 bis 20 Gew.-% eines von (A 1), (A 2), (A 3) und (A 4) verschiedenen ungesättigten Monomeren oder eines Gemischs aus solchen Monomeren

einpolymerisiert enthalten, wobei die Summe der Gewichtsteile der Komponenten (A 1) bis (A 5) stets 100% ergibt, und die Zusammensetzung der Komponente (A3) so gewählt wird, daß bei alleiniger Polymerisation der Komponente (A3) ein Polymethacrylatharz mit einer Glasübergangstemperatur von +10 bis +100 Grad C erhalten wird und

(1.2) hydroxyfunktionellen Polyesterharzen, herstellbar, indem

(a 1) eine cycloaliphatische oder aliphatische Polycarbonsäure oder eine Mischung aus solchen Polycarbonsäuren,
(b 1) ein aliphatisches oder cycloaliphatisches Polyol mit mehr als zwei Hydroxylgruppen im Molekül oder eine Mischung aus solchen Polyolen,
(c 1) ein aliphatisches oder cycloaliphatisches Diol oder eine Mischung aus solchen Diolen und
(d 1) eine aliphatische lineare oder verzweigte gesättigte Monocarbonsäure oder eine Mischung aus solchen Monocarbonsäuren

miteinander in einem molaren Verhältnis von (a 1) : (b 1) : (c 1 ) : (d 1) = 1,0 : 0,2 - 1,3 : 0,0 - 1,1 : 0,0 - 1,4 umgesetzt werden,

ausgewählt wird oder werden.

2. Komponentensystem nach Anspruch 1, **dadurch gekennzeichnet, dass** die Menge an Tris(alkoxycarbonylamino) triazin (2) oder an der Mischung aus Tris(alkoxycarbonylamino)triazinen (2) 1 bis 99 Gew.-%, vorzugsweise 5 bis 90 Gew.-%, beträgt, bezogen auf die Gesamtmenge an Tris(alkoxycarbonylamino)triazin (2) bzw. der Mischung aus Tris(alkoxycarbonylamino)triazinen (2) plus freiem Polyisocyanate (3) bzw. der Mischung aus freien Polyisocyanaten (3).

3. Komponentensystem nach einem der Ansprüche 1 oder 2, **dadurch gekennzeichnet, dass** die Menge der Bestandteile (1) bis (3) in den Verhältnissen zueinander so gewählt sind, dass das Verhältnis OH: (NCO + NH-CO-OR) 1,0 : 0,5 bis 1,0 : 2,0, vorzugsweise 1,0 : 0,8 bis 1,0 : 1,5, beträgt.

4. Komponentensystem nach einem der Ansprüche 1 bis 3, **dadurch gekennzeichnet, dass** es UV-Absorber, vorzugsweise Triazinverbindungen, und Radikalfänger in zumindest einer der beiden Komponenten (1) und/oder (II) enthält.

5. Komponentensystem nach einem der Ansprüche 1 bis 4, **dadurch gekennzeichnet, dass** es Rheologiemittel in zumindest einer der beiden Komponenten (I) und/oder (II) enthält.

6. Komponentensystem nach einem der Ansprüche 1 bis 5, **dadurch gekennzeichnet, dass** es metallorganische Katalysatoren, vorzugsweise zinnund/oder bismutorganische Verbindungen und/oder tertiäre Amin enthält.

7. Verfahren zur Herstellung eines Komponentensystems nach einem der Ansprüche 1 bis 6, **dadurch gekennzeichnet, dass**

- die Komponente (I) durch Mischen des hydroxyfunktionellen Bindemittels (1) oder der Mischung aus hydroxyfunktionellen Bindemitteln (1) mit Tris(alkoxycarbonylamino)triazin (2) oder der Mischung aus Tris(alkoxycarbonylamino)triazinen (2) hergestellt werden und

- die Komponente (II) aus freiem Polyisocyanat (3) oder der Mischung aus freien Polyisocyanaten (3) hergestellt wird.

8. Verfahren zur Herstellung eines Komponentensystems nach einem der Ansprüche 1 bis 6, **dadurch gekennzeichnet, dass**

- die Komponente (II) durch Mischen freien Polyisocyanats (3) oder der Mischung aus freien Polyisocyanaten (3) mit Tris(alkoxycarbonylamino)triazin (2) oder der Mischung aus Tris(alkoxycarbonylamino)triazinen (2) hergestellt wird und

- die Komponente (I) aus dem hydroxyfunktionellen Bindemittel (1) oder der Mischung aus hydroxyfunktionellen Bindemitteln (1) hergestellt wird.

9. Verfahren zur Herstellung eines Komponentensystems nach einem der Ansprüche 1 bis 6, **dadurch gekennzeichnet, dass**

- die Komponente (II) durch Mischen freien Polyisocyanats (3) oder der Mischung aus freien Polyisocyanaten (3) mit einer ersten Teilmenge Tris(alkoxycarbonylamino)triazin (2) oder der Mischung aus Tris(alkoxycarbonylamino)triazinen (2) hergestellt wird und
- die Komponente (I) durch Mischen des hydroxyfunktionellen Bindemittels (1) oder der Mischung aus hydroxyfunktionellen Bindemitteln (1) mit einer zweiten Teilmenge Tris(alkoxycarbonylamino)triazin (2) oder der Mischung aus Tris(alkoxycarbonylamino)triazinen (2) hergestellt wird.

10. Verfahren nach einem der Ansprüche 7 bis 9, **dadurch gekennzeichnet, dass** die Menge der Bestandteile (1) bis (3) so gewählt werden, dass das Verhältnis OH: (NCO + NH-CO-OR) 1,0 : 0,5 bis 1,0 : 2,0, vorzugsweise 1,0 : 0,8 bis 1,0 : 1,5, beträgt.

11. Verwendung eines Komponentensystems nach einem der Ansprüche 1 bis 6 in einem Verfahren zur Beschichtung eines Substrats mittels eines Beschichtungsmittels, **dadurch gekennzeichnet, dass** die Komponente (I) und die Komponente (II) vor der Applikation, vorzugsweise unmittelbar vor der Applikation, zu dem Beschichtungsmittel miteinander vermischt, appliziert und gemeinsam eingebrannt werden.

12. Verwendung eines Komponentensystems nach einem der Ansprüche 1 bis 6 in einem Verfahren zur Beschichtung eines Substrats mittels eines Beschichtungsmittels, **dadurch gekennzeichnet, dass** die Komponente (I) und die Komponente (II) mit Hilfe einer speziellen Zweikomponenten-Applikationseinrichtung appliziert und zusammen eingebrannt werden.

13. Verwendung eines Komponentensystems nach einem der Ansprüche 1 bis 6 zur Herstellung eines Decklacks oder eines Klarlacks.

## Claims

1. Component system for a two-component coating composition comprising

(1) a hydroxy-functional binder or a mixture of hydroxy-functional binders,
(2) tris(alkoxycarbonylamino)triazine or a mixture of tris(alkoxycarbonylamino)triazines and
(3) free (poly)isocyanate or a mixture of free (poly)isocyanates,

in which

- a first component (I) is formed at least from the hydroxy-functional binder (1) or the mixture of hydroxy-functional binders (1),
- in that a second component (II) is formed at least from the free (poly)isocyanate (3) or from the mixture of free (poly)isocyanates (3), and
- the tris(alkoxycarbonylamino)triazine (2) or the mixture of tris(alkoxycarbonylamino)triazines (2) is alternatively a constituent of the first component (I), of the second component (II) or of both components (I) and (II),

***characterized* in that** the binder (1) or the binders (1) is or are selected from the group consisting of

(1.1) hydroxy-functional polyacrylates having a hydroxyl number of from 60 to 200, an acid number of from 0 to 35 and a number-average molecular weight of from 1500 to 10 000 and containing, based on the respective total amount,

(A 1) from 10 to 51% by weight of 4-hydroxy-n-butyl acrylate or 4-hydroxy-n-butyl methacrylate or mixtures thereof,
(A 2) from 0 to 36% by weight of a non- (A 1) hydroxyl-containing ester of acrylic acid or hydroxyl-containing ester of methacrylic acid, or a mixture of such monomers,
(A 3) from 28 to 85% by weight of a non-(A 1) and non-(A 2) aliphatic or cycloaliphatic ester of methacrylic acid having at least four carbon atoms in the alcohol residue, or a mixture of such monomers,
(A 4) from 0 to 3% by weight of ethylenic unsaturated carboxylic acid or a mixture of ethylenic unsaturated carboxylic acids and
(A 5) from 0 to 20% by weight of an unsaturated monomer other than (A 1), (A 2), (A 3), and (A 4), or of a mixture of such monomers

in copolymerized form, the sum of the parts by weight of components (A 1) to (A 5) always being 100% and the composition of component (A3) being chosen such that polymerization of component (A3) alone produces a polymethacrylate resin having a glass transition temperature of from +10 to +100 degrees C, and
(1.2) hydroxy-functional polyester resins preparable by reacting

(a 1) a cycloaliphatic or aliphatic polycarboxylic acid or a mixture of such polycarboxylic acids,
(b 1) an aliphatic or cycloaliphatic polyol having more than two hydroxyl groups in the molecule or a mixture of such polyols,
(c 1) an aliphatic or cycloaliphatic diole or a mixture of such dioles and
(d 1) an aliphatic linear or branched saturated monocarboxylic acid or a mixture of such monocarboxylic acids

with one another in a molar ratio (a 1) : (b 1) : (c 1) : (d 1) of 1.0 : 0.2 - 1.3 : 0.0 - 1.1 : 0.0 - 1.4.

**2.** Component system according to Claim 1, ***characterized* in that** the amount of tris(alkoxycarbonylamino)triazine (2) or of the mixture of tris(alkoxycarbonylamino)triazines (2) is from 1 to 99% by weight, preferably from 5 to 90% by weight, based on the overall amount of tris(alkoxycarbonylamino)triazine (2) or of the mixture of tris(alkoxycarbonylamino)triazines (2) plus free polyisocyanate (3) or of the mixture of free polyisocyanates (3).

**3.** Component system according to either of Claims 1 and 2, ***characterized* in that** the amounts of the constituents (1) to (3) are chosen in their ratios to one another such that the ratio OH:(NCO + NH-CO-OR) is from 1.0:0.5 to 1.0:2.0, preferably from 1.0:0.8 to 1.0:1.5.

**4.** Component system according to one of Claims 1 to 3, ***characterized* in that** it comprises UV absorbers, preferably triazine compounds, and free-radical scavengers in at least one of the two components (I) and/or (II).

**5.** Component system according to one of Claims 1 to 4, ***characterized* in that** it comprises rheological agents in at least one of the two components (I) and/or (II).

**6.** Component system according to one of Claims 1 to 5, ***characterized* in that** it comprises organometallic catalysts, preferably organotin and/or organobismuth compounds and/or tertiary amines.

**7.** Process for preparing a component system according to one of Claims 1 to 6, ***characterized* in that**

- component (I) is prepared by mixing the hydroxy-functional binder (1) or the mixture of hydroxy-functional binders (1) with tris(alkoxycarbonylamino)-triazine (2) or the mixture of tris(alkoxycarbonylamino)triazines (2) and
- component (II) is prepared from the free polyisocyanate (3) or the mixture of free polyisocyanates.

**8.** Process for preparing a component system according to one of Claims 1 to 6, ***characterized* in that**

- component (II) is prepared by mixing free polyisocyanate (3) or the mixture of free polyisocyanates (3) with tris(alkoxycarbonylamino)-triazine (2) or the mixture of tris(alkoxycarbonylamino)triazines (2) and
- component (I) is prepared from the hydroxy-functional binder (1) or the mixture of hydroxy-functional binders (1).

**9.** Process for preparing a component system according to one of Claims 1 to 6, **characterized in that**

- component (II) is prepared by mixing free polyisocyanate (3) or the mixture of free polyisocyanates (3) with a first portion of tris(alkoxycarbonylamino)triazine (2) or the mixture of tris(alkoxycarbonylamino)triazines (2) and
- component (I) is prepared by mixing the hydroxy-functional binder (1) or the mixture of hydroxy-functional binders (1) with a second portion of tris(alkoxycarbonylamino)triazine (2) or the mixture of tris(alkoxycarbonylamino)triazines (2).

**10.** Process according to one of Claims 7 to 9, ***characterized* in that** the amounts of the constituents (1) to (3) are chosen so that the ratio OH:(NCO + NH-CO-OR) is from 1.0:0.5 to 1.0:2.0, preferably from 1.0:0.8 to 1.0:1.5.

**11.** Use of a component system according to one of Claims 1 to 6 in a method of coating a substrate by means of a coating composition, ***characterized* in that** the component (I) and the component (II) are mixed with one another to form a coating composition prior to application, preferably directly prior to application, and are then applied and baked together.

**12.** Use of a component system according to one of Claims 1 to 6 in a method of coating a substrate by means of a coating composition, ***characterized* in that** the component (I) and the component (II) are applied with the aid of a special two-component application device and are baked together.

**13.** Use of a component system according to one of Claims 1 to 6 for producing a topcoat or a clearcoat.

## Revendications

**1.** Système de composants pour une composition de revêtement bicomposant comprenant

(1) un liant à fonction hydroxy ou un mélange de liants à fonction hydroxy,

(2) une tris(alcoxycarbonylamino)triazine ou un mélange de tris(alcoxycarbonylamino)triazines et

(3) du (poly)isocyanate libre ou un mélange de (poly)isocyanates libres,

dans lequel

- un premier composant (I) est formé au moins à partir du liant à fonction hydroxy ou du mélange de liants à fonction hydroxy (1),

- un deuxième composant (II) est formé au moins à partir du (poly)isocyanate libre ou du mélange de (poly) isocyanates libres (3), et

- la tris(alcoxycarbonylamino)triazine (2) ou le mélange de tris(alcoxycarbonylamino)triazines (2) est en variante un constituant du premier composant du deuxième composant (II) ou des deux composants (I) et (II),

**caractérisé en ce que** le liant (1) ou les liants (1) est ou sont choisi(s) parmi le groupe constitué

(1.1) de polyacrylates à fonction hydroxy, présentant un indice d'hydroxyle de 60 à 200, un indice d'acide de 0 à 35 et un poids moléculaire moyen en nombre de 1500 à 10000, renfermant sous forme copolymérisée, par rapport à la quantité totale respective,

(A 1) de 10 à 51 % en poids d'acrylate de 4-hydroxy-n-butyle ou de méthacrylate de 4-hydroxy-n-butyle ou de leurs élanges,

(A 2) de 0 à 36 % en poids d'un ester à groupe hydroxy de l'acide acrylique ou d'un ester à groupe hydroxy de l'acide méthacrylique, différent de (A 1) ou d'un mélange de tels monomères,

(A 3) de 28 à 85 % en poids d'un ester aliphatique ou cycloaliphatique de l'acide méthacrylique, différent de (A 1) et de (A 2), renfermant au moins quatre atomes de carbone dans le radical alcool, ou d'un mélange de tels monomères,

(A 4) de 0 à 3 % en poids d'un acide carboxylique éthyléniquement insaturé ou d'un mélange d'acides carboxyliques éthyléniquement insaturés, et

(A 5) de 0 à 20 % en poids d'un monomère insaturé différent de (A 1), (A 2), (A 3) et (A 4) ou d'un mélange de tels monomères,

où la somme des parties en poids des composants (A 1) à (A 5) est toujours de 100 %, et la composition du composant (A 3) est choisie de telle sorte que lors de la seule polymérisation du composant (A 3), on obtienne une résine de polyméthacrylate présentant une température de transition vitreuse de +10 à +100 degrés C, et

(1.2) de résines de polyesters à fonction hydroxy pouvant être préparées en faisant réagir

(a 1) un acide polycarboxylique cycloaliphatique ou aliphatique ou un mélange de tels acides polycarboxyliques,

(b 1) un polyol aliphatique ou cycloaliphatique renfermant plus de deux groupes hydroxy dans la molécule ou un mélange de tels polyols,

(c 1) un diol aliphatique ou cycloaliphatique ou un mélange de tels diols, et

(d 1) un acide monocarboxylique aliphatique saturé, linéaire ou ramifié ou un mélange de tels acides monocarboxyliques,

les uns avec les autres avec un rapport moléculaire de (a 1) : (b 1) : (c 1) : (d 1) = 1,0 : 0,2 - 1,3 : 0,0 - 1,1 : 0,0 - 1,4.

**2.** Système de composants selon la revendication 1, **caractérisé en ce que** la quantité de tris(alcoxycarbonylamino) triazine (2) ou du mélange de tris(alcoxycarbonylamino)triazines (2) est de 1 à 99 % en poids, de préférence de 5 à 90 % en poids, par rapport à la quantité totale de tris(alcoxycarbonylamino)triazine (2) ou du mélange de tris (alcoxycarbonylamino)triazines (2) et de polyisocyanate libre (3) ou du mélange de polyisocyanates libres (3).

**3.** Système de composants selon l'une quelconque des revendications 1 ou 2, **caractérisé en ce que** les quantités des constituants (1) à (3) sont choisies, dans leurs rapports les unes par rapport aux autres, de telle sorte que le rapport OH: (NCO+NH-CO-OR) soit de 1,0:0,5 à 1,0:2,0, de préférence de 1,0:0,8 à 1,0:1,5.

**4.** Système de composants selon l'une quelconque des revendications 1 à 3, **caractérisé en ce qu'**il comprend des agents absorbant les UV, de préférence des composés triaziniques, et des capteurs de radicaux dans au moins l'un des deux composants (I) et/ou (II).

**5.** Système de composants selon l'une quelconque des revendications 1 à 4, **caractérisé en ce qu'**il comprend des agents rhéologiques dans au moins l'un des deux composants (I) et/ou (II).

**6.** Système de composants selon l'une quelconque des revendications 1 à 5, **caractérisé en ce qu'**il comprend des catalyseurs organométalliques, de préférence des composés organo-étain et/ou organobismuth et/ou des amines

tertiaires.

**7.** Procédé de préparation d'un système de composants selon l'une quelconque des revendications 1 à 6, ***caractérisé* en ce que**

- le composant (I) est préparé en mélangeant le liant à fonction hydroxy (1) ou le mélange de liants à fonction hydroxy (1) avec la tris(alcoxycarbonylamino)triazine (2) ou le mélange de tris(alcoxycarbonylamino)triazines (2), et
- le composant (II) est préparé à partir du polyisocyanate libre (3) ou du mélange de polyisocyanates libres (3).

**8.** Procédé de préparation d'un système de composants selon l'une quelconque des revendications 1 à 6, **caractérisé en ce que**

- le composant (II) est préparé en mélangeant le polyisocyanate libre (3) ou le mélange de polyisocyanates libres (3) avec la tris(alcoxycarbonylamino)triazine (2) ou le mélange de tris(alcoxycarbonylamino)triazines (2), et
- le composant (I) est préparé à partir du liant à fonction hydroxy (1) ou du mélange de liants à fonction hydroxy (1).

**9.** Procédé de préparation d'un système de composants selon l'une quelconque des revendications 1 à 6, **caractérisé en ce que**

- le composant (II) est préparé en mélangeant le polyisocyanate libre (3) ou le mélange de polyisocyanates libres (3) avec une première quantité partielle de tris(alcoxycarbonylamino)triazine (2) ou du mélange de tris (alcoxycarbonylamino)triazines (2), et
- le composant (I) est préparé en mélangeant le liant à fonction hydroxy (1) ou le mélange de liants à fonction hydroxy (1) avec une deuxième quantité partielle de tris(alcoxycarbonylamino)triazine (2) ou du mélange de tris(alcoxycarbonylamino)triazines (2).

**10.** Procédé selon l'une quelconque des revendications 7 à 9, **caractérisé en ce que** les quantités des constituants (1) à (3) sont choisies de telle sorte que le rapport OH: (NCO+NH-CO-OR) soit de 1,0 : 0, 5 à 1,0 : 2,0, de préférence de 1,0 : 0,8 à 1,0 : 1,5.

**11.** Utilisation d'un système de composants selon l'une quelconque des revendications 1 à 6 dans un procédé de revêtement d'un substrat au moyen d'une composition de revêtement, **caractérisée en ce que** le composant (I) et le composant (II) sont mélangés les uns avec les autres pour former la composition de revêtement avant l'application, de préférence immédiatement avant l'application, et sont appliqués et cuits conjointement.

**12.** Utilisation d'un système de composants selon l'une quelconque des revendications 1 à 6 dans un procédé de revêtement d'un substrat au moyen d'une composition de revêtement, **caractérisée en ce que** le composant (I) et le composant (II) sont appliqués à l'aide d'un dispositif d'application bicomposant spécifique et cuits conjointement.

**13.** Utilisation d'un système de composants selon l'une quelconque des revendications 1 à 6 pour la production d'une couche de finition ou d'une couche transparente.